**Europäisches Patentamt**

**European Patent Office**

**Office européen des brevets**

(19)

(11) Veröffentlichungsnummer: **0 174 450**
**B1**

(12)

# EUROPÄISCHE PATENTSCHRIFT

(45) Veröffentlichungstag der Patentschrift:
**10.08.88**

(21) Anmeldenummer: **85107757.8**

(22) Anmeldetag: **22.06.85**

(51) Int. Cl.⁴: **F 16 L 27/08**

(54) Gelenkstück für ein wasserführendes Rohrsystem.

(30) Priorität: **19.07.84 DE 3426575**

(43) Veröffentlichungstag der Anmeldung:
**19.03.86 Patentblatt 86/12**

(45) Bekanntmachung des Hinweises auf die Patenterteilung:
**10.08.88 Patentblatt 88/32**

(84) Benannte Vertragsstaaten:
**AT BE CH DE FR GB IT LI NL**

(56) Entgegenhaltungen:
**DE-U-6 931 425**
**US-A-3 026 129**

(73) Patentinhaber: **GARDENA Kress + Kastner GmbH,**
**Lichternseestrasse 40 Postfach 27 47, D-7900 Ulm**
**(Donau) (DE)**

(72) Erfinder: **Der Erfinder hat auf seine Nennung**
**verzichtet**

(74) Vertreter: **Patentanwälte Ruff und Beier,**
**Neckarstrasse 50, D-7000 Stuttgart 1 (DE)**

LIBER, STOCKHOLM 1988

## Beschreibung

Die Erfindung betrifft ein Gelenkstück für ein wasserführendes Rohrsystem, bei dem die Rohrenden je einen Gelenkansatz mit einem mit einer Verzahnung versehenen Scheibenteil aufweisen, das in einer Ebene parallel zur Längsachse der Rohre liegt und eine Bohrung zur Aufnahme einer Schraube aufweist, deren Längsachse senkrecht zur Längsachse des Rohres verläuft und diese schneidet, und wobei das Wasser mindestens im Gelenkbereich durch einen flexiblen durch das Gelenk hindurchführenden Schlauch geführt ist.

Ein derartiges Gelenkstück ist aus DE-U-69 31 425 bekannt. Es handelt sich dort um ein Griffstück für eine Waschbürste, die an einem Stiel mit einem Gelenk daran gehalten wird. Das Gelenkstück verbindet zwei Rohrteile, wobei der Schlauch durch die Rohre geführt ist. An den vom Gelenk abgewandten Enden der Rohre sind die Schlauchenden mittels eines durch eine Überwurfmutter gegen einen Einsatz anpreßbaren Nippels befestigt. Während hier schon Rohre vorhanden sind, werden diese jedoch nicht zur Wasserführung ausgenutzt, sondern der Schlauch muß die gesamten Rohre durchziehen. Die Scheibenteile sind auf einer Seite des Schlauchs angeordnet, wobei die Scheibenteile einen deutlichen Abstand von den Rohrenden aufweisen. Dadurch werden auftretende Biegemomente nur schlecht aufgefangen, das Gelenk selbst ist starken Belastungen ausgesetzt.

Der Erfindung liegt die Aufgabe zugrunde, ein Gelenkstück für ein wasserführendes Rohrsystem zu schaffen, das einfach und kostengünstig herzustellen ist, das mit geringem Aufwand eine lange Lebensdauer aufweist und bei dem die auftretenden Biegemomente besser aufgefangen werden können. Gelenke dieser Art können beispielsweise bei Autowaschbürsten Verwendung finden, jedoch auch bei Sprühgeräten, beispielsweise bei Spritzdüsen.

Zur Lösung dieser Aufgabe schlägt die Erfindung vor, daß die Scheibenteile der Gelenkansätze auf gegenüberliegenden Seiten des Schlauchs bzw. des Gelenks angeordnet sind und der Schlauch nur im Bereich des Gelenks vorhanden und beidseits des Gelenks mit den Rohrenden flüssigkeitsdicht verbunden ist. Durch die Anordnung je mindestens eines Scheibenteils auf beiden Seiten des Gelenks vergrößert sich der Abstand, an denen die Kräfte angreifen, so daß allein aus geometrischen Gründen eine größere Belastbarkeit bzw. längere Haltbarkeit gegeben ist. Dennoch bleibt der Vorteil erhalten, daß der Schlauch durch den eigentlichen Gelenkpunkt geführt sein kann, so daß bei Abbiegen des Gelenks der Schlauch nur gebogen wird, ohne eine Längenänderung zu erfahren. Dadurch, daß der Schlauch nur im eigentlichen Gelenkbereich vorgesehen ist und beidseits des Gelenks mit den Rohrenden flüssigkeitsdicht verbunden wird, können die Rohre selbst zur Flüssigkeitsführung herangezogen werden, so daß nur ein relativ kurzes Schlauchstück vorhanden ist. Dies verringert selbstverständlich die Material- und Lagerhaltungskosten, so daß das Gelenk an sich wesentlich preisgünstiger herzustellen ist.

Es ist im Prinzip möglich, auf beiden Seiten des Gelenks je zwei Scheibenteile vorzusehen, die jeweils eine Verzahnung aufweisen, so daß das Gelenk mit Hilfe einer anzuziehenden Schraube in beliebigen Winkelstellungen festlegbar ist. Besonders günstig ist es jedoch, wenn in Weiterbildung der Erfindung der Gelenkansatz ein mit dem Scheibenteil vorzugsweise einstückig verbundenes quer zum Rohrende verlaufendes teilzylindrisches Seitenteil aufweisen kann, das auf seiner von dem Scheibenteil weggerichteten Stirnkante mit einer Verzahnung versehen ist, die mit der Verzahnung des Scheibenteils des jeweils anderen Gelenkansatzes zusammenwirkt. Auf diese Weise wird eine besonders günstige feste Verbindung des Gelenks geschaffen, da die Seitenteile zur Verstärkung des Gelenks beitragen.

In Weiterbildung kann vorgesehen sein, daß die freien Längskanten des Seitenteils zur Begrenzung der Schwenkbewegung des Gelenks zusammenwirken. Während bei dem bekannten Gelenk eine Verschwenkung um fast 180° möglich ist, was zu einer beachtlichen Beanspruchung des Schlauches führt, ist es bei der Erfindung mit einfachen Mitteln möglich, eine Anschlagbegrenzung zu erreichen. Die Längskanten können beispielsweise so angeordnet werden, daß eine Verschwenkung aus der neutralen Stellung um etwa 60° in beide Richtungen möglich ist.

Die Erfindung schlägt weiterhin vor, daß das Scheibenteil auf seiner dem jeweils anderen Scheibenteil zugewandten Seite einen zylindrischen Ansatz zur Führung des Seitenteils des jeweils anderen Gelenkansatzes aufweist. Dies führt nochmals zu einer verbesserten und verstärkten Ausführung des Gelenks, wobei jetzt die Führung nicht mehr von der Schraube durchgeführt wird, sondern von den Außenseiten der zylindrischen Ansätze, an denen die Innenseite der Seitenteile, die konzentrisch ausgebildet sind, anliegen. Die Führung wird also nicht nur auf eine große Fläche verteilt, sondern auch weiter nach außen gelegt, so daß sich günstige Winkelverhältnisse ergeben.

Die Erfindung schlägt weiterhin vor, daß bei zusammengesetztem Gelenk der Abstand der freien Stirnkanten der zylindrischen Ansätze etwa dem Durchmesser des Schlauches entspricht. Dadurch erhalten die zylindrischen Ansätze die maximal mögliche Größe, so daß die Führung auf eine möglichst große Fläche verteilt wird.

In Weiterbildung schlägt die Erfindung vor, daß die Rohrenden bis unmittelbar an das Gelenk heranreichen. Während beim Stand der Technik die Rohrenden einen deutlichen Abstand vom Gelenk aufweisen, wird es nach den Maßnahmen der Erfindung möglich, daß der Schlauch im Bereich des Gelenks von außen praktisch nicht mehr zugänglich ist, so daß die Gefahr einer Beschädigung nicht mehr gegeben ist. Der Schlauch wird durch die Scheibenteile, die Seitenteile und die zylindrischen Ansätze fast vollständig eingeschlossen, so daß er maximal geschützt ist.

Die Erfindung schlägt weiterhin vor, daß die Rohrenden einstückig mit den Gelenkansätzen ausgebildet sind. Besonders eignet sich hierfür die Ausbildung aus Kunststoff, so daß die Rohrenden einschließlich der Gelenkansätze einstückig sein können.

In weiterer Ausgestaltung der Erfindung kann vorgesehen sein, daß der äußere Rand der Verzahnung des Scheibenteils und des Seitenteils einen Abstand von ihrem jeweiligen Außenrand aufweisen und die äußeren verzahnungsfreien Teile zur gegenseitigen Anlage aneinander ausgebildet sind. Dadurch wird erreicht, daß das Biegemoment bei der Benutzung des mit dem Gelenk versehenen Rohrsystems nicht auf die Verzahnung, sondern auf die äußeren verzahnungsfreien Teile übertragen wird, die weiter außen angeordnet sind und dadurch die entstehenden Kräfte besser auffangen können. Die Verzahnung selbst braucht diese Kräfte nicht aufzunehmen, so daß keine Gefahr der Beschädigung oder Überbeanspruchung der Zähne der Verzahnung auftritt. Es kann ebenfalls vorgesehen sein, daß die Verzahnung des außenliegenden Teils, nämlich des Scheibenteils, in radialer Richtung über die Verzahnung des innenliegenden Teils greift, nämlich des Seitenteils. Dadurch wird erreicht, daß quer zur Verschwenkrichtung des Gelenks eine erheblich größere Festigkeit erzielt wird, da durch den übergreifenden Rand die Basis, die die Biegekräfte aufnehmen muß, praktisch verdoppelt wird.

Während beim Stand der Technik der Schlauch mit seinen Enden an einen Nippel anpreßbar war, der zum Anschluß eines Wasserschlauchs o. dgl. ausgebildet ist, schlägt die Erfindung zur Befestigung des Schlauches vor, daß dieser im Rohrende in einer ihn von außen umgebenden Führung stramm gehaltert ist, die sich bis unmittelbar in den Gelenkbereich erstreckt. Im Gelenkbereich ist beim Stand der Technik der Schlauch in den Rohrenden mit radialem Abstand eingesetzt, so daß die Rohrenden den Schlauch nicht führen können. Nach der Erfindung wird der Schlauch jedoch stramm in eine Führung, die insbesondere eine Bohrung sein kann, eingesetzt und gehaltert. Dabei kann der Durchmesser der Bohrung etwas kleiner sein als der Durchmesser des Schlauches. Durch dieses Einsetzen des Schlauches unter Vorspannung in die Führung wird ein dichtes Anliegen der Schlauchwandung erreicht, so daß ein Kleben oder eine zusätzliche Dichtung überflüssig sind. Unter Belastung, d.h. unter Wasserdruck, legt sich der flexible Schlauch mit größerer Kraft an der Führung an, so daß die Abdichtung immer besser wird. Der Schlauch braucht nur noch von einer Seite her durch die zylindrischen Bohrungen eingezogen zu werden. Es hat sich herausgestellt, daß diese einfache Art eine außerordentlich zufriedenstellende und günstige Abdichtung ergibt. Dabei kann es vorgesehen sein, daß das Rohrende einen vom Gelenk weg gerichteten rohrförmigen Ansatz in Verlängerung der Bohrung aufweist. Dadurch vergrößert sich die Anlagefläche nochmals beträchtlich, ohne daß die Herstellung erschwert oder verteuert wird. Es können Einrichtungen vorgesehen sein, die eine teilweise Durchmesserverminderung zur Erzielung einer stärkeren Anpressung vorsehen.

Der Schlauch erstreckt sich dabei vorzugsweise mindestens bis zum freien Ende des rohrförmigen Ansatzes, vorzugsweise überragt er diesen Ansatz etwas.

Zur Verstärkung des Gelenks kann erfindungsgemäß vorgesehen sein, daß es einen etwa zylindrischen konzentrisch zur Gelenkachse angeordneten vorzugsweise aus Metall bestehenden Einsatz mit einer Querbohrung zur Aufnahme des Schlauchs aufweist. Dieser Einsatz kann zur Verstärkung des Gelenks benutzt werden, da er praktisch eine Welle bilden kann, um die der eine Gelenkansatz verschwenkbar ist. Darüber hinaus kann der Einsatz zur Führung der Schraube dienen, beispielsweise kann er eine Gewindebohrung aufweisen. Der Einsatz ist vorzugsweise in dem zylindrischen Ansatz eines Gelenkansatzes eingesetzt und drehfest mit diesem verbunden. Zur drehfesten Verbindung kann der Ansatz mindestens eine Längsrippe aufweisen, die in einer entsprechenden Längsnut des zylindrischen Ansatzes geführt ist. Die Querbohrung zum Durchführen des Schlauches kann vorzugsweise trichterförmig ausgebildet sein, wobei die Seitenwände des Trichters besonders günstig konvex gebogen sind, so daß sie bei Abknicken des Gelenkes für den Schlauch eine gebogene Seitenwand bieten, an der er sich anlegen kann. Obwohl normalerweise ein Abknicken des Schlauches nicht gegeben ist, kann diese gebogene Seitenwand zur Verhinderung eines Abknickens mitwirken.

Der Einsatz kann einen Käfig zur Aufnahme einer Mutter aufweisen, der im Querschnitt dem Querschnitt der Mutter entsprechen kann.

Mindestens im Bereich eines zylindrischen Ansatzes kann der Einsatz in Umfangsrichtung verlaufende Rippen aufweisen, die zur Verringerung der Reibung in diesem Bereich beitragen.

In gleicher Weise kann die Innenwand mindestens eines zylindrischen Ansatzes Längsrippen aufweisen, die ebenfalls zur Verringerung der Reibung beitragen können.

Die Erfindung sieht weiterhin vor, daß mindestens ein Rohrende, das aus Kunststoff besteht, mit einem Metallrohr verpreßt ist. Das Gelenk besteht damit mit Ausnahme des Einsatzes vollständig aus Kunststoff, während die weiterführenden Rohre aus Metall bestehen können.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

Fig. 1   eine schematische Seitenansicht eines von der Erfindung vorgeschlagenen Gelenkstückes;

Fig. 2   eine zur Hälfte geschnittene Aufsicht auf ein Gelenkstück aus der Richtung der Feststellschraube;

Fig. 3   einen Schnitt etwa längs Linie III-III in Fig. 2 in vergrößertem Maßstab;

Fig. 4   stark vereinfacht in perspektivischer Darstellung eine Explosionsdarstellung des Gelenkstücks.

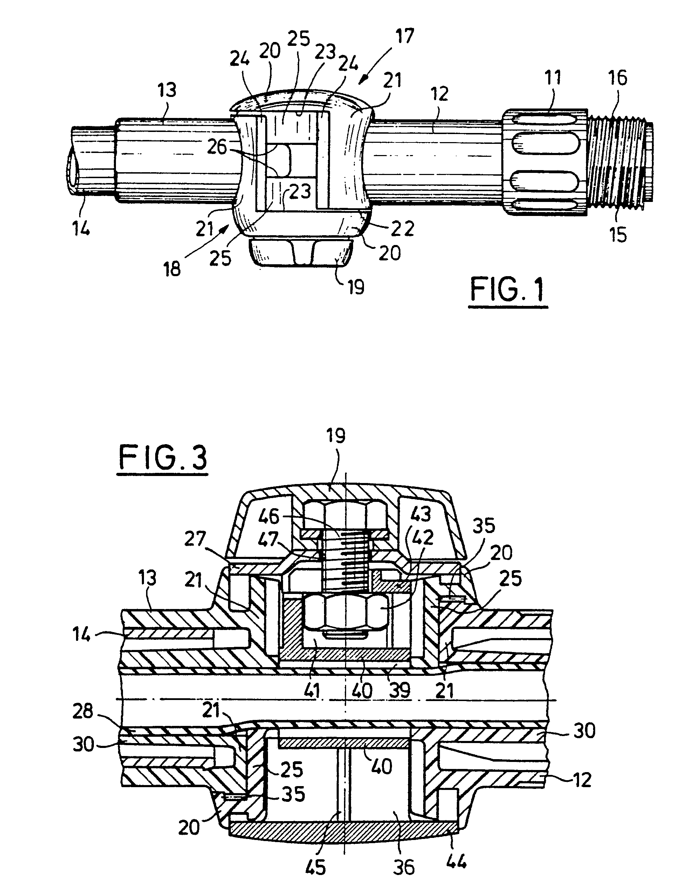

Das in Fig. 1 schematisch dargestellte Gelenkstück dient zum gelenkigen Verbinden eines mit einer Kupplung 11 versehenen Rohrendes 12 mit einem zweiten Rohrende 13, das an einem abgebrochen dargestellten Rohr 14 befestigt ist. Ein derartiges Kupplungsstück kann beispielsweise in die Rohrzuleitung zu einer Waschbürste oder einer Gartenspritze eingesetzt werden. Die Kupplung 11 enthält an ihrem freien Ende einen Schraubansatz 15 mit einem Außengewinde 16, mit dessen Hilfe ein Kupplungsnippel angeschraubt werden kann. Beide Rohrenden 12, 13 weisen jeweils einen Gelenkansatz 17, 18 auf, die beide ähnlich aufgebaut sind und mit Hilfe eines Drehknopfes 19 in irgendeiner Winkelstellung verriegelbar sind. Jeder Gelenkansatz enthält ein Scheibenteil 20, das etwa parallel zur Längsachse des jeweils zugehörigen Rohrendes 12, 13 verläuft. Einstückig mit dem Scheibenteil 20 verbunden ist ein Seitenteil 21, das die Form eines Kreiszylinders aufweist, dessen Längsachse senkrecht zur Längsachse der Rohrenden 12, 13 verläuft und diese schneidet. Die Stirnkante 22 jedes Seitenteils 21 liegt unmittelbar der Innenseite 23 jedes Scheibenteils 20 gegenüber. Die beiden Längskanten 24 jedes Seitenteils 21, von denen in Fig. 1 jeweils nur eine zu sehen ist, besitzen einen Abstand voneinander. Auf den Innenseiten 23 beider Scheibenteile 20 ist jeweils ein zylindrischer Ansatz 25 angeordnet, der innerhalb der Seitenteile 21 liegt. Die freien Stirnkanten 26 der zylindrischen Ansätze 25 sind im Abstand voneinander angeordnet.

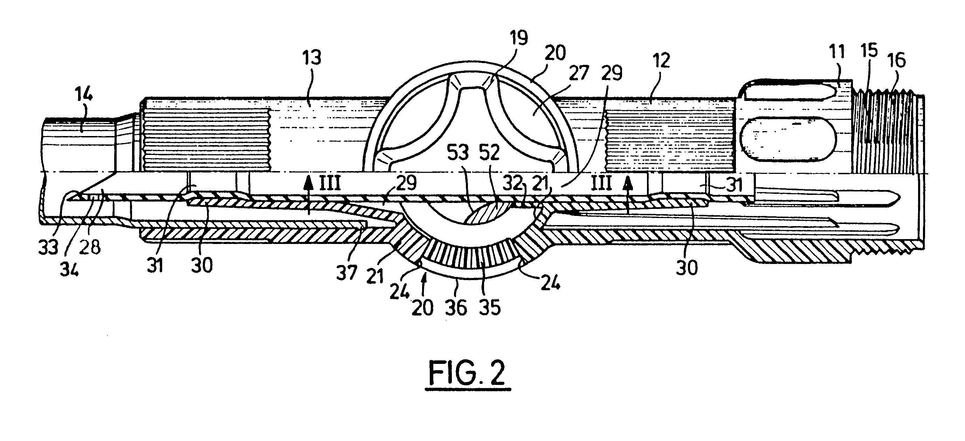

Fig. 2 zeigt nun eine Aufsicht auf das Kupplungsstück aus der Richtung des Drehknopfes 19. Der Drehknopf 19 besitzt etwa die Form eines vierstrahligen Sternes. Unter ihm ist eine Metallplatte 27 angeordnet, die in ihrer Mitte ein Loch aufweist. Die Metallplatte 27 liegt auf der Oberseite des Scheibenteiles 20.

Die Anordnung des Schlauches 28 geht aus der unteren Hälfte der Fig. 2 hervor, die einen Schnitt durch die Anordnung zeigt. Beide Seitenteile besitzen eine in Längsrichtung des zugehörigen Rohrendes 12, 13 verlaufende Bohrung 29, durch die der Schlauch 28 hindurchgeführt ist. Auf der vom Gelenk abgewandten Seite jedes Seitenteils 21 ist ein rohrförmiger Ansatz 30 angeordnet, der eine Verlängerung der Bohrung 29 darstellt. Der rohrförmige Ansatz weist einen Innendurchmesser auf, der etwas kleiner ist als der Außendurchmesser des Schlauches 28, so daß dieser unter Vorspannung an der Innenseite des Rohransatzes 30 anliegt. Im Bereich der Enden der Rohransätze 30 besitzt dieser einen Abschnitt 31 verringerten Durchmessers, wodurch ein verbessertes Anliegen des Schlauchs in diesem Bereich gegeben ist. An der in Fig. 2 rechten Seitewand 21 des Rohrendes 12 ist in Richtung auf das Gelenk noch ein kurzer Ansatz 32 vorgesehen, der nochmals eine Führung für den Schlauch 28 innerhalb des Gelenkes darstellt.

Der Schlauch 28 ist an seinem in Fig. 2 linken Ende 33 schräg abgeschnitten und weist dort ein Loch 34 auf. Das Einführen des Schlauches 28 geschieht von rechts in Fig. 2 her, wobei ein Draht mit einem Haken durch die Ansätze 30 hindurchgesteckt und der Haken in Eingriff mit dem Loch 34 gebracht wird. Dann wird der Schlauch mit Hilfe des Hakens durch die Ansätze 30 und die Löcher 29 gezogen.

Der Schlauch 28 steht auf beiden Seiten der rohrförmigen Ansätze 30 etwas über.

Die in Fig. 2 sichtbare Innenseite 23 des Scheibenteils 20 weist eine Verzahnung 35 auf, deren äußerer Rand einen deutlichen Abstand vom Außenrand 36 des Scheibenteils 20 aufweist.

Ebenfalls aus Fig. 2 ist der Abstand zwischen den Längskanten 24 der Seitenteile 21 zu sehen.

Bei dem in Fig. 2 linken Rohrende 13 ist in dieses Rohrende ein aus Metall bestehendes Rohr 14 eingepreßt, das an seinem vorderen Ende eine widerhakenartige Profilierung 37 aufweist.

Der Schlauch 28 führt genau durch die Mitte des Gelenkes, so daß bei Abbiegen des Gelenkes nur eine Verbiegung des Schlauches, jedoch keine Längenänderung auftritt.

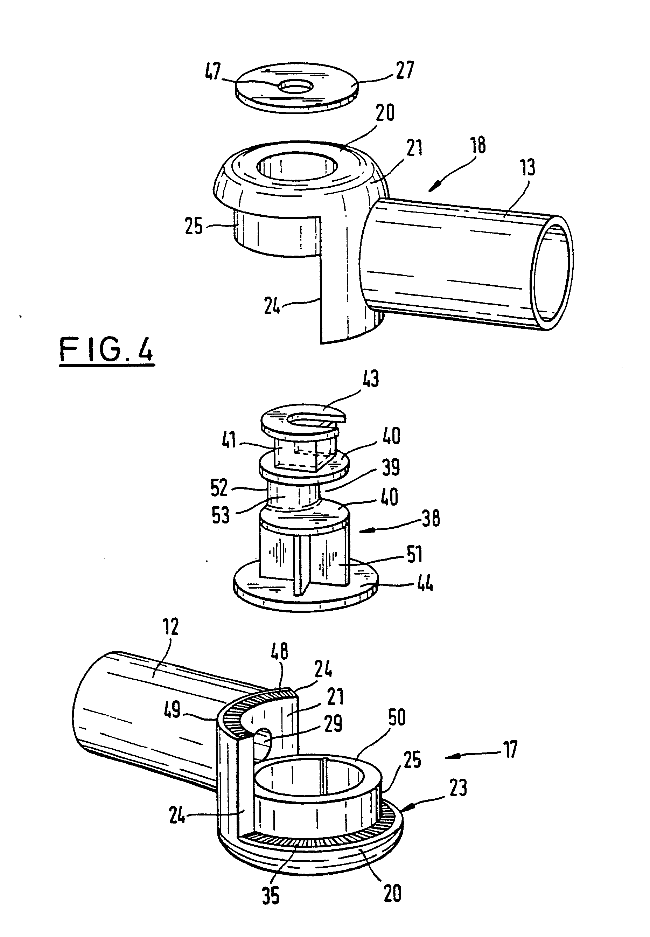

Aus Fig. 3 gehen die Einzelheiten des Gelenks nochmals hervor. Das in Fig. 3 linke Rohrende 13 ist einstückig mit dem oberen Scheibenteil 20 sowie der linken Seitenwand 21 ausgebildet. Dementsprechend ist das in Fig. 3 rechte Rohrende 12 einstückig mit dem unteren Scheibenteil 20 und der rechten Seitenwand 21 ausgebildet. Der in Fig. 3 untere zylindrische Ansatz 25 gehört einstückig zu dem rechten Rohrende 12, während der in Fig. 3 obere zylindrische Ansatz 25 einstückig zu dem linken Rohrende 13 gehört. Der untere zylindrische Ansatz 25 bildet eine Lagerfläche für die linke Seitenwand 21, während der obere zylindrische Ansatz 25 eine Anlagefläche für die rechte Seitenwand 21 bildet. Dadurch sind die beiden Rohrenden 12, 13 verschwenkbar aneinander geführt.

Die Unterseite des oberen Scheibenteils 20 weist im Randbereich die Verzahnung 35 auf, die mit einer Verzahnung auf der Oberkante des rechten Seitenteils 21 zusammenwirkt.

Das gleiche gilt für die Oberseite des unteren Scheibenteils 20. Wie sich aus Fig. 3 ergibt, ist radial außerhalb der Verzahnung 35 ein Aufliegen des Scheibenteils 20 auf dem Seitenteil 21 gegeben. Dadurch werden Kräfte, die beispielsweise zu einer Verschwenkung im Uhrzeigersinn führen, nicht von der Verzahnung 35, sondern von der glatten Auflagefläche aufgenommen.

Mittig wird das Gelenk von einem Metalleinsatz 38 durchquert. Der zylindrische Einsatz 38 weist eine Querbohrung 39 auf, durch die Schlauch 28 hindurchgeführt ist. Die Querbohrung 39 ist nach oben und nach unten von einer Scheibe 40 eingeschlossen. Oberhalb der Scheibe 40 ist ein Käfig 41 für eine Sechskantmutter 42 angeordnet, der nach oben durch eine Platte 43 abgeschlossen ist. Der Einsatz 38 weist an seiner Unterseite eine verbreiterte Abschlußplatte 44 auf, die auf einem Rand des unteren Scheibenteils 20 aufliegt. Der Einsatz 38 ist drehfest mit diesem unteren Scheibenteil 20 verbunden, wozu eine Rippe 45 vorgesehen ist, die in Längsrichtung des Einsatzes 38 verläuft und in einer Nut des zylindrischen Ansatzes 25 eingreift. Der Drehknopf 19 weist drehfest einen Gewindeschaft 46 auf, der durch eine zentrale Bohrung 47 in der Metallplatte 27 und eine Öffnung in der Platte 43 hindurchgreift und in die Mutter 42 eingeschraubt ist. Ein Festziehen des Drehknopfes 19 führt dazu, daß die Abschlußplatte 44 und die Metallplatte 27 aufeinander zu gedrückt werden, wodurch die Scheibenteile 20 auf die Ränder der Seitenteile 21 gedrückt werden. Dies führt zu einem Eingreifen der Verzahnung 35 und damit zu einem Verriegeln des Gelenkes in einer beliebigen Winkelstellung.

Fig. 4 zeigt zum besseren Verständnis in vereinfachter Form nochmals die Einzelteile des Gelenks. Der Metalleinsatz 38 ist in der Mitte gezeichnet, obwohl er beim Zusammensetzen des Gelenks von unten her eingesetzt werden müßte. Das in Fig. 4 untere Rohrende 13 ist mit dem Seitenteil 21 versehen, das auf seiner oberen Stirnkante eine Verzahnung 48 aufweist. Diese Verzahnung 48 weist, wie bereits erwähnt, einen Abstand vom Außenrand 49 der Seitenwand 21 auf. Die Seitenwand 21 erstreckt sich über einen Winkel von etwa 120°, so daß ihre Längskanten 24 von den entsprechenden Längskanten 24 des zweiten Seitenteiles 21 einen gewissen Abstand aufweisen und dadurch die Verschwenkbarkeit des Gelenkes begrenzen. Das Seitenteil 21 besitzt eine Bohrung 29, die etwa in der Längsachse des Rohrendes 13 liegt. Einstückig mit dem Seitenteil 21 und dem unteren Scheibenteil 20 ist ein zylindrischer Ansatz 25 verbunden, dessen obere Stirnkante 50 bündig mit dem unteren Rand der Bohrung 29 verläuft.

Die Innenseite 23 des Scheibenteils 20 besitzt ebenfalls eine Verzahnung 35, während der Außenrand frei von einer Verzahnung bleibt.

In den in Fig. 4 unten dargestellten Gelenkansatz 18 wird von unten her der Einsatz 38 eingeschoben, wobei der Innendurchmesser des zylindrischen Ansatzes 50 kleiner ist als der Außendurchmesser der Abschlußplatte 44. Der Einsatz weist oberhalb der Abschlußplatte 44 vier Flügel 51 auf, die beispielsweise in Nuten auf der Innenseite des zylindrischen Ansatzes 25 eingreifen können und dadurch zu einer drehfesten Verbindung zwischen dem Einsatz 38 und dem einen Gelenkansatz 18 führen. Oberhalb der Flügel 51 ist eine der beiden Scheiben 40 angeordnet, die mit der zweiten Scheibe 40 über Seitenteile 52 verbunden ist, die zwischen sich die Querbohrung 39 für den Schlauch 28 bilden. Aus Fig. 2 ergibt sich, daß die innere Seitenwand 53 des Seitenteils 52 konvex gebogen ist und dadurch einen Knickschutz für den Schlauch 28 bildet. Oberhalb der oberen Scheibe 40 ist der Käfig 41 für die Mutter 42 angeordnet, der von rechts her offen ist. Abgeschlossen wird der Einsatz 38 auf seiner Oberseite von der Platte 43, die einen Schlitz zum Durchführen des Gewindeschaftes 46 aufweist.

Der zweite in Fig. 4 obere Gelenkansatz 17 ist fast identisch zum Gelenkansatz 18 ausgebildet. Wiederum ist mit der Seitenwand 21 der Scheibenteil 20 und der zylindrische Ansatz 25 einstückig verbunden, wobei der gesamte Gelenkansatz einstückig in das Rohrende 12 übergeht. Der Gelenkansatz 17 wird von oben auf den Gelenkansatz 18 und den Einsatz 38 aufgeschoben, so daß die Außenseite des zylindrischen Ansatzes 25 an der Innenseite des Seitenteils 21 sowie die Innenseite des Ansatzes 25 an der Außenseite des Einsatzes 38 geführt ist. Der Umfang der Scheibe 40 und der Platte 43 bildet Umfangsrippen, die die Reibung beim Verschwenken des Gelenkes verringern.

Oben auf den oberen Gelenkansatz 17 wird die Metallplatte 27 aufgelegt, und der Drehknopf 19 mit seinem Gewindeschaft 46 durch die Bohrung 47 hindurchgeführt. Das dargestellte Gelenk besteht aus zwei jeweils einstückigen Gelenkansätzen 17, 18, dem metallischen Einsatz 38, dem Drehknopf 19, der Mutter 42 und dem Schlauch 28, also aus insgesamt sehr wenigen Einzelteilen. Dennoch bietet er ein hervorragend arbeitendes Gelenkstück.

**Patentansprüche**

1. Gelenkstück für ein flüssigkeitsführendes Rohrsystem, bei dem die Rohrenden (12, 13) je einen Gelenkansatz (17, 18) mit einem mit einer Verzahnung (35) versehenen Scheibenteil (20) aufweisen, das in einer Ebene parallel zur Längsachse der Rohre liegt und eine Bohrung zur Aufnahme eines Befestigungselementes aufweist, dessen Längsachse senkrecht zur Längsachse des Rohres verläuft und diese schneidet, und wobei die Flüssigkeit mindestens im Gelenkbereich durch einen flexiblen durch das Gelenk hindurchführenden Schlauch (28) geführt ist, dadurch gekennzeichnet, daß die Scheibenteile (20) auf gegenüberliegenden Seiten des Schlauches (28) bzw. des Gelenkes angeordnet sind, der Schlauch (28) nur im Bereich des Gelenks vorhanden und beidseits des Gelenks mit den Rohrenden (12, 13) flüssigkeitsdicht verbunden ist.

2. Gelenkstück nach Anspruch 1, dadurch gekennzeichnet, daß der Gelenkansatz (17, 18) ein mit dem Scheibenteil (20) vorzugsweise einstückig verbundenes quer zum Rohrende (12, 13) verlaufendes teilzylindrisches Seitenteil (21) aufweist, das auf seiner von dem Scheibenteil (20) weggerichteten Stirnkante (22) mit einer Verzahnung (48) versehen ist, die mit der Verzahnung (35) des Scheibenteils (20) des jeweils anderen Gelenkansatzes (18, 17) zusammenwirkt, wobei vorzugsweise die freien Längskanten (24) der Seitenteile (21) zur Begrenzung der Schwenkbewegung des Gelenks zusammenwirken.

3. Gelenkstück nach Anspruch 2, dadurch gekennzeichnet, daß das Scheibenteil (20) auf seiner dem jeweils anderen Scheibenteil (20) zugewandten Seite (23) einen zylindrischen Ansatz (25) zur Führung des Seitenteils (21) des jeweils anderen Gelenkansatzes (18, 17) aufweist und vorzugsweise bei zusammengesetztem Gelenk der Abstand der freien Stirnkanten (26) der zylindrischen Ansätze (25) etwa dem Durchmesser des Schlauchs (28) entspricht.

4. Gelenkstück nach einem der vorhergehenden Ansprüche, dadurch gekennzeichnet, daß die Rohrenden (12, 13) bis unmittelbar an das Gelenk heranreichen und vorzugsweise einstückig mit den Gelenkansätzen (17, 18) ausgebildet sind.

5. Gelenkstück nach einem der Ansprüche 2 bis 4, dadurch gekennzeichnet, daß der äußere Rand der Verzahnung (35) des Scheibenteils (20) und des Seitenteils (21) einen Abstand von ihrem jeweiligen Außenrand (36, 49) aufweisen und die äußeren verzahnungsfreien Teile zur gegenseitigen Anlage ausgebildet sind.

6. Gelenkstück nach einem der vorhergehenden Ansprüche, dadurch gekennzeichnet, daß der Schlauch (28) im Rohrende (12, 13) in einer ihn von außen umgebenden, mindestens teilweise als etwa zylindrische Bohrung (29) ausgebildeten Führung stramm gehalten ist, die sich bis unmittelbar in den Gelenkbereich erstreckt.

7. Gelenkstück nach Anspruch 6, dadurch gekennzeichnet, daß das Rohrende (12, 13) einen vom Gelenk weg gerichteten rohrförmigen Ansatz (30) in Verlängerung der Bohrung (29) aufweist und der Schlauch (28) sich mindestens etwa bis zum freien Ende des rohrförmigen Ansatzes (30) erstreckt.

8. Gelenkstück nach einem der vorhergehenden Ansprüche, dadurch gekennzeichnet, daß es einen etwa zylindrischen konzentrisch zur Gelenkachse angeordneten vorzugsweise aus Metall bestehenden Einsatz (38) mit einer Querbohrung (39) zur Aufnahme des Schlauches (28) aufweist, wobei vorzugsweise der Einsatz (38) in dem zylindrischen Ansatz (25) eines Gelenkansatzes (18) eingesetzt und dort drehfest mit diesem verbunden ist und die Querbohrung (39) sich etwa trichterförmig mit konvexen Seitenwänden (53) erweitert.

9. Gelenkstück nach Anspruch 8, dadurch gekennzeichnet, daß der Einsatz (38) zur drehfesten Aufnahme einer Mutter (42) eines Schraubenkopfes o.dgl ausgebildet ist.

10. Gelenkstück nach einem der Ansprüche 3 bis 9, dadurch gekennzeichnet, daß der Einsatz (38) mindestens im Bereich eines zylindrischen Ansatzes (25) Umfangsrippen aufweist und/oder die Innenwand des zylindrischen Ansatzes (25) Längsrippen (54) aufweist.

11. Gelenkstück nach einem der vorhergehenden Ansprüche, dadurch gekennzeichnet, daß mindestens ein aus Kunststoff bestehendes Rohrende (13) mit einem Metallrohr (14) verpreßt ist und/oder mit einer Kupplung (11) verbunden ist.

**Claims**

1. Joint for a liquid-carrying pipe system, in which the pipe ends (12, 13) in each case have a joint shoulder (17, 18) with a disk part (20) provided with a tooth system (35), arranged in a plane parallel to the longitudinal axis of the pipes and having a bore for receiving a fastening element, whose longitudinal axis is at right angles to the longitudinal axis of the pipe and intersects the same, the liquid being guided at least in the joint area by a flexible hose (28) passing through the joint, characterized in that the disk parts (20) are arranged on opposite sides of the hose (28) or joint, the hose (28) is only present in the joint area and on either side of the joint, the hose (28) is connected in liquid-tight manner to the pipe ends (12, 13).

2. Joint according to claim 1, characterized in that the joint shoulder (17, 18) has a partially cylindrical side part (21) running at right angles to the pipe end (12, 13) and preferably connected in one piece to the disk part (20), said side part (21) being provided on its front edge (22) directed away from the disk part (20) with a tooth system (48), which cooperates with the tooth system (35) of the disk part (20) of the in each case other joint shoulder (18, 17) and preferably the free longitudinal edges (24) of the side parts (21) cooperate to limit the pivoting movement of the joint.

3. Joint according to claim 2, characterized in that the disk part (20) is provided on its side (23) facing the in each case other disk part (20) with a cylindrical projection (25) for guiding the side part (21) of the in each cace other joint shoulder (18, 17) and preferably with the joint assembled, the spacing of the free front edges (26) of the cylindrical projections (25) roughly corresponds to the diameter of hose (28).

4. Joint according to one of the preceding claims, characterized in that the pipe ends (12, 13) extend directly up to the joint and are preferably constructed in one piece with the joint shoulders (17, 18).

5. Joint according to one of the claims 2 to 4, characterized in that the outer edge of the tooth system (35) of the disk part (20) and the side part (21) has a spacing from its particular outer edge (36, 49) and the outer tooth-free parts are constructed for reciprocal engagement.

6. Joint according to one of the preceding claims, characterized in that the hose (28) in the pipe end (12, 13) is rigidly secured in a guide surrounding it from the outside and which is at least partly constructed as an approximately cylindrical bore (29) extending directly into the joint area.

7. Joint according to claim 6, characterized in that the pipe end (12, 13) has a tubular shoulder (30) directed away from the joint in an extension of the bore (29) and the hose (28) at least extends up to the free end of the tubular shoulder (30).

8. Joint according to one of the preceding claims, characterized in that it has an approximately cylindrical and preferably metal insert (38) arranged concentrically to the joint axis and having a cross-hole (39) for receiving the hose (28) and preferably the insert (38) is placed in the cylindrical projection (25) of a joint shoulder (18) and is fixed there in non-rotary manner therewith and the cross-hole (39) widens in funnel-like manner with convex side walls (53).

9. Joint according to claim 8, characterized in that the insert (38) is constructed for the non-rotary reception of a nut (42) of a screw head or the like.

10. Joint according to one of the claims 3 to 9, characterized in that the insert (38) has circumferential ribs at least in the vicinity of a cylindrical projection (25) and/or the inner wall of the cylindrical projection (25) has longitudinal ribs (54).

11. Joint according to one of the preceding claims, characterized in that at least one plastic pipe end (13) is pressed together with a metal pipe (14) and/or is connected to a coupling (11).

**Revendications**

1. Articulation pour un système de conduites véhiculant un liquide, et dans laquelle les extrémités tubulaires (12, 13) comportent chacune un embout (17, 18) de l'articulation, possédant un élément en forme de disque (20) muni d'une denture (35) et situé dans un plan parallèlement à l'axe longitudinal des tubes, et comprenant un perçage servant à recevoir un élément de fixation dont l'axe longitudinal est perpendiculaire à l'axe longitudinal du tube et recoupe ce dernier, et dans laquelle le liquide est guidé au moins dans la zone de l'articulation par un tuyau flexible (28) traversant l'articulation, caractérisée en ce que les parties en forme de disques (20) sont situées sur des côtés opposés du tuyau (28) ou de l'articulation et que le tuyau (28) est présent uniquement dans la zone de l'articulation et est relié, d'une manière étanche aux liquides, aux extrémités tubulaires (12, 13) des deux côtés de l'articulation.

2. Articulation selon la revendication 1, caractérisée en ce que l'embout (17, 18) de l'articulation possède une partie latérale partiellement cylindrique (21), qui est reliée de préférence d'un seul tenant à la partie en forme de disque (20), s'étend transversalement par rapport à l'extrémité tubulaire (12, 13) et comporte, sur son bord frontal (22) disposé à l'opposé de la partie en forme de disque (20), une denture (48) coopérant avec la denture (35) de la partie en forme de disque (5) de l'autre embout (18, 17) de l'articulation, auquel cas de préférence les bords longitudinaux libres (24) des parties latérales (21) coopèrent pour limiter le mouvement de pivotement de l'articulation.

3. Articulation selon la revendication 2, caractérisée en ce que la partie en forme de disque (20) comporte, sur sa face (23) tournée vers l'autre partie en forme de disque (20), une embase cylindrique (25) servant à guider la partie latérale (21) de l'autre embout (18, 17) de l'articulation, et que de préférence, lorsque l'articulation est à l'état assemblé, la distance entre les bords frontaux libres (26) des embases cylindriques (25) correspond approximativement au diamètre du tuyau (28).

4. Articulation suivant l'une des revendications précédentes, caractérisée en ce que les extrémités tubulaires (12, 13) s'étendent jusqu'à proximité immédiate de l'articulation et sont réalisées de préférence d'un seul tenant avec les embouts (17, 18) de l'articulation.

5. Articulation selon l'une des revendications 2 à 4, caractérisée en ce que les bords extérieurs de la denture (35) de la partie en forme de disque (20) et de la partie latérale (21) sont espacés des bords extérieurs respectifs (36, 49) de ces parties, et que les parties extérieures sans denture sont agencées de manière à s'appliquer l'une contre l'autre.

6. Articulation selon l'une des revendications précédentes, caractérisée en ce que le tuyau (28) est maintenu rigidement dans l'extrémité tubulaire (12, 13) dans un guide entourant extérieurement le tuyau et réalisé au moins partiellement sous la forme d'un perçage approximativement cylindrique (29), ce guide s'étendant directement jusque dans la zone de l'articulation.

7. Articulation selon la revendjcation 6, caractérisée en ce que l'extrémité tubulaire (12, 13) possède un embout tubulaire (30) s'écartant de l'articulation et situé dans le prolongement du perçage (29), et que le tuyau (2Ü) s'étend au moins approximativement jusqu'au niveau de l'extrémité libre de l'embout tubulaire (30).

8. Articulation selon l'une des revendications précédentes, caractérisée en ce qu'elle comporte un insert approximativement cylindrique (38) réalisé de préférence en un métal, disposé concentriquement par rapport à l'axe de l'articulation et possédant un perçage transversal (39) servant à loger le tuyau (28), l'insert (38) étant inséré de préférence dans l'embase cylindrique (25) d'un embout (18) de l'articulation et y est relié avec blocage en rotation, tandis que le perçage transversal (39) s'évase approximativement en forme d'entonnoir avec ces parois latérales convexes (53).

9. Articulation selon la revendication 8, caractérisée en ce que l'insert (38) est agencé de manière à loger, avec blocage en rotation, un écrou (42) d'une tête de vis ou analogue.

10. Articulation suivant l'une des revendications 3 à 9, caractérisée en ce que l'insert (38) comporte, au moins dans la zone d'une embase cylindrique (25), des nervures périphériques et/ou que la paroi intérieure de l'embase cylindrique (25) comporte des nervures longitudinales (54).

11. Articulation selon l'une des revendications précédentes, caractérisée en ce qu'au moins une extrémité tubulaire (13) réalisée en une matière plastique est emmanchée à force sur un tube métallique (14) et/ou est reliée à un accouplement (11).

FIG. 1

FIG. 3

FIG. 2

0 174 450

FIG.4